# EUROPEAN PATENT SPECIFICATION

(11) **EP 1 189 465 B1**
(45) Date of publication and mention of the grant of the patent: **22.03.2006**
(21) Application number: 00120475.9
(22) Date of filing: 19.09.2000
(51) Int. Cl.: H04Q 7/32

(54) **Mobile terminal with removable memory having SIM card function**
Mobiles Endgerät mit entfernbarem Speicher und SIM-Kartenfunktion
Terminal mobile à mémoire amovible avec fonction de carte SIM

(43) Date of publication of application: 20.03.2002
(73) Proprietor: Sony Deutschland GmbH, 10785 Berlin (DE)
(72) Inventor: Christensen, Per Hartmann, 9000 Aalborg (DK); Yamagishi, Yutaka, Digital Telecomm. Europe, 85609 Aschheim (DE); Ushino, Tatsuji, Digital Telecommunications Europe, 85609 Aschheim (DE)
(74) Representative: Körber, Martin Hans

(56) References cited:
- FR-A- 2 748 834
- US-A- 5 633 484

## Description

The present invention relates to a mobile terminal for a wireless telecommunication system, such as the GSM or the UMTS system, having a removable memory module.

Mobile terminals, such as portable telephones, palmtops, personal digital assistants or the like, of wireless telecommunication systems of the second generation and the third generation are recently developing into more and more versatile and powerful multimedia devices. Due to the higher transmission data rates between the mobile terminal and respective base stations of the wireless telecommunication system, increasing data amounts have to be stored and managed in the mobile terminals. Thus, the concept of removable memory modules has been proposed by the applicant. These removable memory modules, which are called and protected as memory sticks, comprise essentially a memory means such as a random access memory (RAM) of any kind and a memory control means controlling the data reading and writing from and to the memory means. Such a removable memory module considerably extends the storage capacity of modem mobile terminals. Further, the removable memory module may be used on the basis of standardised interface connections with several different electronic devices, so that a user may use valuable information, such as eMail addresses, telephone numbers etc., flexibly in different devices by simply interchanging the removable memory module. On the other hand, mobile terminals for wireless telecommunication systems generally require the insertion of a subscriber identity module card or SIM card before to be operated by a user. A subscriber identity module card comprises subscriber identity information identifying a user or a subscriber to the respectively used wireless telecommunication system. Hereby, a respective user is recognised while communicating in the wireless telecommunication system so that the respectively contracted features can be provided by the system and the user can be billed.

EP 0 564 105 A2 proposes a memory module adapter which may be removably inserted into a cellular radio telephone. The memory module adapter has the size and configuration, i.e. electrical contacts, to be compatible with a reader for a credit card sized SIM card in the cellular radio telephone. Further, the memory module adapter comprises a memory module reader such as a plug for a small SIM card. Generally, the memory module adapter is described to be a data card or any other form of package enclosing or carrying a memory device. However, the only disclosure in relation to the exchange of information between the memory module adapter and the cellular telephone is that contacts are provided, which are compatible in size and configuration with a credit card size SIM card reader of the telephone.

FR-A-2 748 834 discloses a mobile terminal with a removable memory module according to the preamble of claim 1.

The object of the present invention is to provide a mobile terminal for a wireless telecommunication system which combines the necessity of providing subscriber identity information in a removable device with the advantages of a removable memory module considerably expanding the storage capacity of the mobile terminal. The above object is solved by a mobile terminal for a wireless telecommunication system according to claim 1, which comprises a terminal control means for controlling the function of the mobile terminal and a removable memory module comprising a memory means and a memory control means for controlling the memory means. The memory module is removably connected to the terminal control means by an interface having several connections for exchanging information between the terminal control means and the memory control means, whereby the memory module further comprises a subscriber identity means for providing subscriber identity information to the terminal control module via at least one of said several connections of said interface. The memory module comprises switch means, said switch means respectively connecting said subscriber identity means to said at least one of said several connections of said interface. The respective switch means selectively switches the respective connection of said interface between said memory control means and said subscriber identity means. The subscriber identity means and the memory control means share at least one common connection of the interface and the selective switch means ensures that the wanted subscriber identity function or the memory function of the removable memory module can be selected in a simple way.

Thus, the mobile terminal according to the present invention advantageously combines the functions of a removable memory module and a removable SIM card in a single removable device in a simple and effective way. Particularly, the integration of the subscriber identity function and the memory module function into a single removable device ensures a high level of integration. Further, since the subscriber identity means and the memory control means use at least one common connection for exchanging information with the terminal control means a high level of simplicity is achieved.

Advantageously, the subscriber identity means comprises a connector means for connecting a removable subscriber identity module card. In this case, the removable memory module carries a port or a connector to insert a separate subscriber identity module card.

Alternatively, the subscriber identity means advantageously comprises a subscriber memory means for storing subscriber identity information. In this case, the subscriber identity function is integrated in the removable memory module and the subscriber memory means is a permanent part of the memory module.

Particularly, switch means can be easily controlled by respective control signals and are easy to integrate so that the entire removable memory module can be based on a highly integrated IC technology. Advantageously, said at least one connection selectively connected to said subscriber identity means and said memory control means is a data in/out connection. Hereby, data stored in the memory means or subscriber information provided by the subscriber identity means are selectively supplied to or from the same connector connecting the respective data line to a corresponding data in/out connector and line of the terminal control means.

Advantageously, the respective switch means is controlled by the terminal control means. Hereby, the terminal control means sends a control signal to the respective switch means in order to switch the respective line between the memory control means and the subscriber identity means.

Alternatively, the respective switch means is advantageously controlled by the memory control means. Hereby, the memory control means transmits a control signal to the respective switch means in order to switch it between the subscriber identity means and the respective line of the memory control means.

The mobile terminal according to the present invention therefore integrates the subscriber identity function and an additional memory function on a separate removable device in a simple and effective way. Particularly, the integration of these two functions in a single device reduces the space requirements in the mobile terminal. Further, by using the same interface connections for the subscriber identity means and the memory control means of the removable memory module, the number of necessary connections is considerably reduced.

In the following description, advantageous embodiments of the present invention are explained in more detail in relation to the enclosed drawings, in which
figure 1 shows a mobile terminal and a first embodiment of the removable memory module according to the present invention, and
figure 2 shows a second embodiment of a removable memory module according to the present invention to be used with the mobile terminal shown in figure 1.

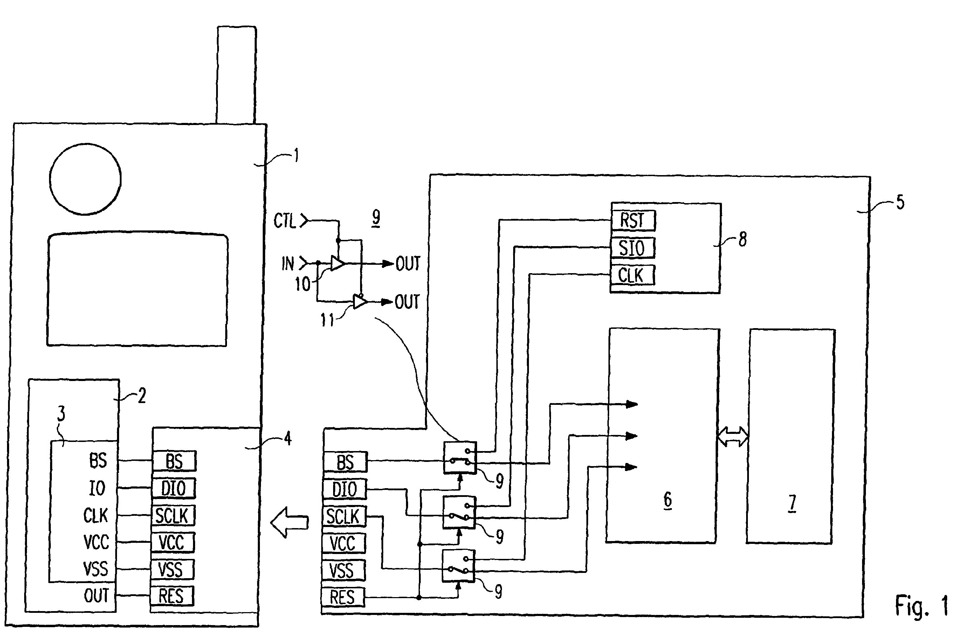

Figure 1 shows a mobile terminal 1 for a wireless telecommunication system, as e.g. the GSM or the UMTS system. The mobile terminal 1 comprises all necessary elements for the operation in a wireless telecommunication system, such as input keys, display, loudspeaker, microphone, antenna, and the like. For the sake of clarity, only the elements important and necessary for the present invention are shown.

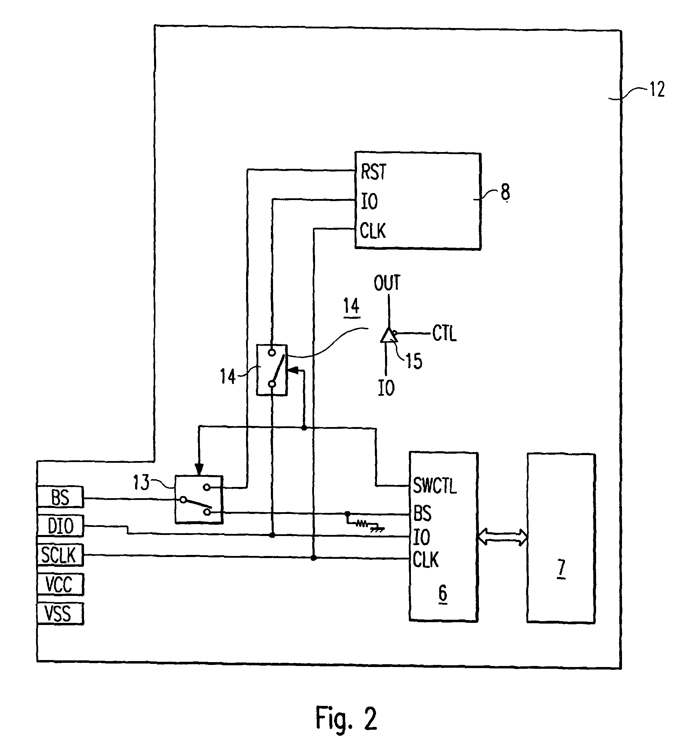

The mobile terminal 1 comprises a terminal control means 2 for controlling the functions of the mobile terminal 1. The terminal control means 2 may e.g. be a microcontroller, a microchip, or the like. Particularly, the terminal control means 2 is adapted to control the information exchange with a removable memory module 5 as shown in a first embodiment in figure 1 or a removable memory module 12 as shown in a second embodiment in figure 2. It is to be understood, that the removable memory modules 5 and 12 shown in figure 1 and 2, respectively, are only shown schematically and that their real sizes are considerably smaller as compared to the size of the mobile terminal 1 according to the present invention.

The terminal control means 2 of the mobile terminal 1 comprises a group 3 of input/output connections or input/output pins respectively being connected to a corresponding connection or terminal of an interface 4. The removable memory module 5 or 12 is adapted to be removably connected to the interface 4, e.g. by means of a snap-in connection or the like.

The interface 4 of the mobile terminal 1 comprises, as shown in figure 1, a bus state connection BS connected with a corresponding bus state pin of the terminal control means 2 for providing a bus state signal to a connected memory module 5 or 12. Further, the interface 4 comprises a data input/output connection connected to a corresponding data input/output pin 10 of the terminal control means 2 for exchanging input/output data with a connected memory module 5 or 12. The interface 4 further comprises a clock signal connection SCLK connected to a corresponding clock pin CLK of the terminal control means 2 for providing a clock signal to a connected removable memory module 5 or 12. Further, the interface 4 comprises a control voltage terminal VCC connected to a corresponding control voltage pin VCC of the terminal control means 2 for providing a control voltage to a connected removable memory module 5 or 12. The interface 4 further comprises a steady voltage connection VSS connected to a corresponding steady voltage pin VSS of the terminal control means 2 for providing a steady voltage to a connected removable memory module 5 or 12. Typically, the steady voltage terminal VSS of the terminal control means 2 is connected to ground. The interface 4 may further comprise a reserve connection RES connected to a corresponding output pin OUT of the terminal control means 2. The reserve connection RES is e.g. a connection reserved for further use designed to have space for future extensions of the functionality.

In case of the first embodiment shown in figure 1, the terminal control means 2 supplies a control signal via the output pin OUT and the reserve connection RES of the interface 4 to the connected removable memory module 5 in order to control the switching of the switch means 9 as explained below in more detail. In case of the second embodiment of the removable memory module 12 shown in figure 2, the reserve connection of the interface 4 is not needed to control the removable memory module 12.

The removable memory module 5 shown in figure 1 comprises a number of electrical connections or terminals to be connected with the connections BS, DIO, SCLK, VCC, VSS and RES of the interface 4 of the mobile terminal 1. The removable memory module 5 further comprises a memory control means 6 for controlling a memory means 7. The memory control means 6 may e.g. be a microprocessor, a microcontroller or the like. The memory means 7 controlled by the memory control means 6 is a storage unit to which data can be written and from which data can be read.

Further, the removable memory module 5 comprises a subscriber identity means 8 for providing subscriber identity information. The subscriber identity means 8 is either a connector means for connecting a removable subscriber identity module card or comprises a subscriber memory means for storing subscriber identity information. In the latter case, the subscriber identity means 8 may further comprise a subscriber identity controller means for controlling the reading and writing of subscriber data from and to the subscriber memory means.

Respective switch means 9 selectively connect some of the connections or terminals of the removable memory module 5 with corresponding connections or terminals of the subscriber identity means 8 and the memory control means 6 in order to control and provide a data exchange as necessary. A first switch means 9 is connected between the bus state signal connection BS of the memory module 5 a reset signal connection RST of the subscriber identity means 8 and a bus state signal connection of the memory control means 6. A second switch means 9 is connected between the data input/output connection DIO of the memory module 5, a subscriber data input/output connection SIO of the subscriber identity means 8 and a data input/output connection of the memory control means 6. A third switch means 9 is connected between the clock signal connection SCLK of the memory module 5, a clock signal connection CLK of the subscriber identity means 8 and a clock signal connection of the memory control means 6. The first, second and third switch means 9 are connected to the reserve connection RES of the memory module 5 to be selectively and simultaneously switched between the respective connections of the memory control means 6 and the subscriber identity means 8.

The first, second and third switch means 9 may e.g. be configured as shown enlarged in figure 1. In the shown example, the first, second and third switch means 9 respectively comprise a first diode 10 and a second diode 11. A control signal CTL supplied via the reserve connection RES is supplied directly to the first diode 10 but supplied as an inverted signal to the second diode 11. Depending on a supplied control signal CTL, an input signal IN, as e.g. a signal supplied from one of the connections BS, DIO or SCLK, is either supplied via the first diode 10 to the respective connection of the subscriber identity means 8 or via the second diode 11 to the memory control means 6. The control means CTL is supplied from the terminal control means 2 via the OUT pin depending on which of the functionalities of the memory module 5 is required.

Thus, the connections BS, DIO and SCLK of the memory module 5 are selectively used by the subscriber identity means 8 or the memory control means 6 depending on which of the functionalities is requested by the terminal control means 2. In case that the first, second and third switch means 9 are switched to the subscriber identity means 8, the bus state signal supplied from the terminal control means 2 via the respective bus state signal connections BS is used in the subscriber identity module 8 as a reset signal. Similarly, one or more clock signals supplied from the terminal control means 2 via the respective clock signal connections SCLK is used as a clock signal in the subscriber identity means 8. Subscriber identity data can be supplied to the subscriber identity means 8 via the respective data input/output terminals DIO or read from the subscriber identity means 8 to the terminal control means 2. In case that the first, second and third switch means 9 are switched to the memory control means 6, a bus state signal supplied via the bus state signal connections BS and a clock signal supplied via the clock signal connections SCLK are used in a corresponding way. Data are exchanged via the data input/output connections DIO under the control of the memory control means 6 between the memory means 7 and the terminal control means 2.

It is to be noted, that the control voltage connection VCC and the steady voltage connection VSS are also connected to the memory control means 6 and/or the subscriber identity means 8 as necessary. However, their function is not important for the understanding of the present invention and thus no connections are shown. Further, the interface 4 as well as the removably memory module 5 may further comprise additional and not shown connections or terminals necessary for further functions as required.

The same is true for the subscriber identity means 8, which may comprise more than the three connections shown in figure 1 or figure 2, such as an additional connection for supplying a variable supply voltage, as e.g. a programming voltage or the like.

The subscriber identity means 8 and the memory control means 6 do not necessarily need the same number and kind of clock signals, so that the terminal control means 2 may supply the respectively necessary clock signals via the clock signal connections SCLK depending on which of the two units is addressed. The same is true for the bus state signal supplied from the terminal control means 2 via the bus state signal connections, which may be varied depending on how the setting of the switch means 9 is. For the removable memory module 5 according to the first embodiment shown in figure 1, the terminal control means 2 directly controls and changes the settings of the first, second and third switch means 9 by a control signal supplied via the reserved connections RES. Here, the setting of the first, second and third switch means 9 as directly changed upon the reception of a control signal from the terminal control means 2.

Figure 2 shows a schematic diagram of a removable memory module 12 according to the second embodiment of the present invention. The essential features and units of the removable memory module 12 correspond to the ones shown for and explained in relation to the removable memory module 5 shown in figure 1. The main difference is that the reserve connection RES of the interface 4 is not necessary to supply a control signal for changing the settings of the switch means 13 and 14 connecting respective connections of the interface 4, the subscriber identity means 8 and the memory control means 6. In the removable memory module 12 according to the second embodiment shown in figure 2, the clock signal connection SCLK of the memory module 12 is directly and steadily connected to the clock signal connection CLK of the subscriber identity means 8 and the clock signal connection CLK of the memory control means 6. A first switch means 13 is connected between the bus state signal connection BS of the memory module 12, the reset signal connection RST of the subscriber identity means 8 and the bus state signal connection of the memory control means 6. A second switch means 14 is connected between the data input/output connection DIE of the memory module 12, the data input/output connection IO of the subscriber identity means 8 and the data input/output connection of the memory control means 6. The first switch means 13 and the second switch means 14 are respectively connected to and controlled via a switch control signal connection SWCTL of the memory control means 6. Thereby, the first switch means 13 is a three-state output controlled switch means like the first, second and third switch means 9 of the memory module 5 shown in figure 1, whereas the second switch means 15 of the memory module 12 only is a two-state output controlled switch. In other words, the first switch means 13 selectively switches the bus state signal connection BS between the respective connections or terminals of the subscriber identity means 8 and the memory control means 6. On the other hand, the data input/output connection DIO of the memory module 12 is constantly and directly connected to the data input/output connection IO of the memory control means 6. The second switch means 15 is selectively connecting the data input/output connection DIO of the memory module 12 and the data input/output connection IO of the memory control means 6 with the data input/output connection IO of the subscriber identity means 8. Thus, even during the terminal control means 2 is accessing the subscriber identity means 8, the data exchange is being monitored by the memory control means 6. When the terminal control means 2 of the mobile terminal 1 first addresses the removable memory module 12, it sends a first command to the memory control means 6, e.g. via the bus state signal connection BS. The first switch means 13 is thus normally switched to the memory control means 6 and the second switch means 14 is open (disconnected). In case that the terminal control means 2 wants to address the memory control means 6 and the memory means 7, the setting of the first switch 13 and the second switch 14 remains unchanged. In case that the terminal control means 2 wants to access the subscriber identity means 8, the memory control means 6, after the reception of a respective command, outputs a control signal via its switch control connection SWCTL which simultaneously switches the first switch means 13 and the second switch means 14 so that the subscriber identity means 8 can be addressed. While the terminal control means 2 accesses the subscriber identity means 8, the data exchange is monitored by the memory control means 6. When the memory control means 6 recognizes the end of the data transfer between the terminal control means 2 and the subscriber identity means 8, e.g. after detecting that a certain time period has passed without any data having been sent, the memory control means 6 automatically outputs another control signal via the switch control connection SWCTL which switches the first switch means 13 and the second switch means 14 back to their original position.

Thus, the memory module 12 according to the second embodiment has, compared to the memory module 5 according to the first embodiment, the advantage that one connection less is required for controlling the setting of the switches. On the other hand, the required processing is more complex.

As shown enlarged in figure 2, the second switch means 14 may comprise a diode 15. A control signal CTL supplied from the switch control connection tap SWCTL of the memory control means 6 is supplied as an inverted signal to the diode 15 in order to selectively connect or disconnect the data input/output connection tap IO of the subscriber identity means 8. The configuration of the first switch means 13 of the memory module 12 can e.g. correspond to the configuration of the switch means 9 shown enlarged in figure 1. The other functionalities and configurations of the subscriber identity means 8, the memory control means 6, the memory means 7 and the several connection taps of the memory module 15 correspond identically to the functionalities and configurations respectively explained in relation to the memory module 5 shown in figure 1.

## Claims

1. Mobile terminal (1) for a wireless telecommunication system, with
a terminal control means (2) for controlling the functions of the mobile terminal, and
a removable memory module (5, 12) comprising a memory means (7) and a memory control means (6) for controlling the memory means (7),
said memory module (5, 12) being removably connected to the terminal control means (2) by an interface (4) having several connections for exchanging information between said terminal control means (2) and said memory control means (6), whereby said memory module (5, 12) further comprises a subscriber identity means (8) for providing subscriber identity information to said terminal control module (2) via at least one of said several connections of said interface (4),
**characterized in,**
**that** said memory module (5,12) comprises switch means (9, 13, 14), said switch means (9, 13, 14) respectively connecting said subscriber identity means (8) to said at least one of said several connections of said interface (4),
whereby said respective switch means (9, 13, 14) selectively switch a respective connection of said interface (4) between said memory control means (6) and said subscriber identity means (8).

2. Mobile terminal according to claim 1,
**characterized in,**
**that** said subscriber identity means (8) comprises a connector means for connecting a removable subscriber identity module card.

3. Mobile terminal according to claim 1,
**characterized in,**
**that** said subscriber identity means (8) comprises a subscriber memory means for storing subscriber identity information.

4. Mobile terminal according to claim 1,2 or 3
**characterized in**,
said at least one connection selectively connected to said subscriber identity means (8) and said memory control means (6) is a data in/out connection.

5. Mobile terminal according to one of the claims 1 to 4,
**characterized in,**
**that** said respective switch means (5) is controlled by said terminal control means (2).

6. Mobile terminal according to one of the claims 1 to 4,
**characterized in,**
**that** said respective switch means (13, 14) is controlled by said memory control means (6).

## Patentansprüche

1. Mobiles Endgerät (1) für ein drahtloses Telekommunikationssystem mit einer Endgerät-Steuereinrichtung (2) zur Steuerung der Funktionen des mobilen Endgerätes und mit einem entfernbaren Speichermodul (5, 12), welches eine Speichereinrichtung (7) und eine Speicher-Steuereinrichtung (6) zur Steuerung der Speichereinrichtung (7) aufweist,
wobei das betreffende Speichermodul (5, 12) mit der Endgerät-Steuereinrichtung (2) mittels einer Schnittstelleneinrichtung (4) lösbar verbunden ist, die mehrere Verbindungen für einen Austausch von Informationen zwischen der betreffenden Endgerät-Steuereinrichtung (2) und der genannten Speichersteuereinrichtung (6) aufweist,
wobei das betreffende Speichermodul (5, 12) ferner eine Teilnehmeridentifikationseinrichtung (8) zur Bereitstellung einer Teilnehmeridentifikationsinformation für das genannten Endgerät-Steuermodul (2) über zumindest eine der betreffenden verschiedenen Verbindungen der Schnittstelleneinrichtung (4) aufweist,
**dadurch gekennzeichnet, dass** das genannte Speichermodul (5, 12) eine Schalteinrichtung (9, 13, 14) aufweist,
dass die Schalteinrichtung (9, 13, 14) die betreffende Teilnehmeridentifikationseinrichtung (8) mit der genannten zumindest einen Verbindung der genannten verschiedenen Verbindungen der Schnittstelleneinrichtung (4) verbindet,
wobei die betreffende Schalteinrichtung (9, 13, 14) eine entsprechende Verbindung der genannten Schnittstelleneinrichtung (4) zwischen der Speicher-Steuereinrichtung (6) und der Teilnehmeridentifikationseinrichtung (8) selektiv schaltet.

2. Mobiles Endgerät nach Anspruch 1,
**dadurch gekennzeichnet, dass** die Teilnehmeridentifikationseinrichtung (8) eine Verbindeeinrichtung zum Anschließen einer entfernbaren Teilnehmeridentifikations-Modulkarte aufweist.

3. Mobiles Endgerät nach Anspruch 1,
**dadurch gekennzeichnet, dass** die Teilnehmeridentifikationseinrichtung (8) eine Teilnehmerspeichereinrichtung zur Speicherung einer Teilnehmeridentifikationsinformation aufweist.

4. Mobiles Endgerät nach Anspruch 1, 2 oder 3,
**dadurch gekennzeichnet, dass** die zumindest eine Verbindung, welche selektiv mit der genannten Teilnehmeridentifikationseinrichtung (8) und der genannten Speicher-Steuereinrichtung (6) verbunden ist, eine Daten-Eingangs-/-Ausgangsverbindung ist.

5. Mobiles Endgerät nach einem der Ansprüche 1 bis 4,
**dadurch gekennzeichnet, dass** die genannte Schalteinrichtung (5) durch die Endgerät-Steuereinrichtung (2) gesteuert wird.

6. Mobiles Endgerät nach einem der Ansprüche 1 bis 4,
**dadurch gekennzeichnet, dass** die betreffende Schalteinrichtung (13, 14) durch die genannte Speicher-Steuereinrichtung (6) gesteuert wird.

## Revendications

1. Terminal mobile (1) pour un système de télécommunication sans fil, avec
un moyen de commande de terminal (2) pour commander les fonctions du terminal mobile, et
un module de mémoire amovible (5, 12) comprenant un moyen de mémoire (7) et un moyen de commande de mémoire (6) pour commander le moyen de mémoire (7),
ce module de mémoire (5, 12) étant connecté de façon amovible au moyen de commande de terminal (2) par une interface (4) ayant de multiples connexions pour échanger de l'information entre le moyen de commande de terminal (2) et le moyen de commande de mémoire (6),
le module de mémoire (5, 12) comprend en outre un moyen d'identité d'abonné (8) pour fournir une information d'identité d'abonné au module de commande de terminal (2) par l'intermédiaire de l'une au moins des multiples connexions de l'interface (4),
**caractérisé en ce que**
le module de mémoire (5, 12) comprend des moyens de commutation (9, 13, 14), ces moyens de commutation (9, 13, 14) connectant respectivement le moyen d'identité d'abonné (8) à au moins une des multiples connexions de l'interface (4),
grâce à quoi les moyens de commutation respectifs (9, 13, 14) commutent sélectivement une connexion respective de l'interface (4) entre le moyen de commande de mémoire (6) et le moyen d'identité d'abonné (8).

2. Terminal mobile selon la revendication 1,
**caractérisé en ce que**,
le moyen d'identité d'abonné (8) comprend un moyen consistant en un connecteur pour connecter une carte de module d'identité d'abonné amovible.

3. Terminal mobile selon la revendication 1,
**caractérisé en ce que**,
le moyen d'identité d'abonné (8) comprend un moyen de mémoire d'abonné pour stocker une information d'identité d'abonné.

4. Terminal mobile selon la revendication 1, 2 ou 3
**caractérisé en ce que**,
l'au moins une connexion connectée sélectivement au moyen d'identité d'abonné (8) et au moyen de commande de mémoire (6) est une connexion d'entrée/sortie de données.

5. Terminal mobile selon l'une des revendications 1 à 4
**caractérisé en ce que**,
le moyen de commutation respectif (5) est commandé par le moyen de commande de terminal (2).

6. Terminal mobile selon l'une des revendications 1 à 4
**caractérisé en ce que**,
le moyen de commutation respectif (13, 14) est commandé par le moyen de commande de mémoire (6).
